# DEMANDE DE BREVET EUROPEEN

(11) **EP 0 695 588 A1**
(43) Date de publication de la demande: **07.02.1996**
(21) Numéro de dépôt: 95401815.6
(22) Date de dépôt: 02.08.1995
(51) Int. Cl.: B09B 3/00, B65D 65/46

(54) **Matériaux composites à base de charge d'origine végétale et du sucre et ses procédés de mise en oeuvre, produits utilisant cesdits matériaux et procédés**

(30) Priorité: 03.08.1994 FR 9409631
(71) Demandeur: ETIENNE LACROIX - TOUS ARTIFICES SA, F-31600 Muret (FR)
(72) Inventeur: Duvicq, François, F-40230 Tosse (FR); Baricos, Jean, F-31520 Ramonville-Saint-Agne (FR); Champanet, Jean, F-31300 Toulouse (FR)
(74) Mandataire: Ahner, Francis

(57) **Abrégé**

La présente invention concerne une nouvelle composition pour matériau aggloméré à base de produits biodégradables d'origine végétale comme charge, et un liant biodégradable à base de sucre cristallisé, utile notamment pour la préparation de pièces biodégradables de forme déterminée, par moulage, extrusion ou injection, pultrusions et rotomoulage, permettant la valorisation et le recyclage de nombreux produits industriels d'origine végétale, sans nécessiter un traitement préalable coûteux de ces derniers.

La présente invention concerne également les produits obtenus avec ladite composition et leur procédé de préparation.

## Description

La présente invention concerne un nouveau produit aggloméré biodégradable comprenant une charge constituée par des produits biodégradables d'origine végétale, et un liant biodégradable à base de sucre cristallisé.

Elle s'inscrit en particulier dans un processus de valorisation de déchets d'origine végétale, habituellement employés comme source d'énergie de combustion de faible rendement énergétique, ou encore pour le compostage.

Des produits d'origine végétale ont déjà été employés pour la réalisation d'éléments de construction tels que des panneaux d'aggloméré (FR-A-2 549 768 ou FR-A-2 648 743). Toutefois, on recherche dans ce cas à employer directement des fibres ligno-cellulosiques, que l'on imprègne d'un liant et que l'on forme à haute température et sous pression élevée. Il est même nécessaire, dans le cas où le liant est un sucre résiduel des fibres ligno-cellulosiques, de le porter à sa température de décomposition (caramélisation), à laquelle il réticule pour donner au produit obtenu des caractéristiques de résistance aux contraintes mécaniques appropriées à son usage comme matériau de construction. Or, une fois le liant réticulé (caramélisé), il n'est plus possible de modifier la forme du produit obtenu, de l'employer pour le moulage ou l'extrusion de pièces d'une forme particulière. De même, le sucre caramélisé rend le produit obtenu difficilement biodégradable. Par ailleurs, il n'est pas possible selon ces procédés antérieurs d'employer des déchets bruts, tels que par exemple de la sciure de bois ou encore du liège, puisqu'il serait alors nécessaire de les déstructurer à l'état de fibres, ce qui rajoute une étape de traitement du matériau brut trop coûteuse, inacceptable lorsqu'il s'agit de valoriser des déchets industriels.

On connaît également du brevet US-A-S 174 571, des disques de ball-trap obtenus par le moulage d'un mélange de graines d'oiseau et de sucre dans un rapport pondéral de 2/1 en volume. Ces produits sont obtenus par simple moulage du mélange de sucre et de graines, et ne sont pas adaptés à d'autres usages que des disques de ball-trap puisqu'ils sont très fragiles.

On connaît enfin de la demande de brevet EP-A-0 556 774, des articles biodégradables moulés constitués par des restes de produits alimentaires et un agent liant, qui se décomposent rapidement de 2 à 4 semaines ou sont comestibles.

La présente invention concerne donc une nouvelle composition pour matériau aggloméré à base de produits biodégradables d'origine végétale comme charge, et un liant biodégradable à base de sucre, utile notamment pour la préparation de pièces biodégradables de forme déterminée, par moulage, extrusion ou injection, imprégnation filaire, estampage ou pultrusion, et rotomoulage ou filage, permettant la valorisation de nombreux déchets industriels d'origine végétale, sans nécessiter un traitement préalable coûteux de ces derniers.

Les produits biodégradables d'origine végétale utiles selon l'invention sont choisis parmi l'ensemble des produits d'origine végétale susceptibles d'être employés comme charge d'un produit aggloméré, et plus particulièrement choisis parmi les graines de céréales ou encore des déchets industriels tels que la rafle de maïs, la sciure de bois, le liège, les aiguilles de pin, le coton brut, etc., et leurs mélanges en toutes proportions.

D'une manière avantageuse, notamment pour assurer une bonne continuité de la charge dans le produit aggloméré tout en lui conférant de bonnes propriétés mécaniques, la charge d'origine végétale est sous une forme particulaire, présentant une taille moyenne comprise entre 0,005 mm et 2 cm, de préférence comprise entre 0,05 et 2 mm.

Par taille moyenne, on entend selon la présente invention les dimensions moyennes des mailles d'un tamis au travers desquelles pourraient s'écouler les particules de charge de la composition selon l'invention.

Bien entendu, les particules de charge ne se présentent pas en général sous une forme régulière, et bien que pouvant s'écouler dans les mailles du tamis défini ci-dessus, présentent une dimension supérieure à la dimension moyenne de ces dernière. D'une manière avantageuse, la plus grande dimension des particules de charge de la composition selon l'invention est inférieure à 10 cm, de préférence inférieure à 5 cm.

Le liant est pour sa part du sucre par exemple cristallisé, sous forme pulvérulente ou à l'état fondu, en particulier du sucre cristallisé disponible dans le commerce, qu'il provienne de betterave sucrière ou de canne à sucre. Les propriétés liantes de ce dernier proviennent du fait qu'on le fait fondre mélangé à la charge, à une température inférieure à la température de dégradation de ce dernier, pour lier ladite charge lorsqu'il solidifie en se refroidissant.

La composition selon l'invention peut donc comprendre tant du sucre cristallisé, que du sucre cristallisé fondu que l'on aura laissé refroidir. Dans le premier cas, elle se présentera sous une forme pulvérulente, et dans le second cas sous une forme solide (plaques, pains, barreaux, etc) qu'il faudra ensuite faire fondre de nouveau pour obtenir une pièce agglomérée de forme déterminée.

D'une manière avantageuse, on fait fondre le sucre cristallisé à une température comprise entre 80°C et 150°C, de préférence 110°C, grâce à la teneur en eau des composants en maintenant le mélange sous agitation mécanique pour assurer une répartition uniforme du liant et de la charge.

Le rapport pondéral entre la charge et le liant sera défini en fonction des caractéristiques techniques recherchées pour le produit mis en forme, et de son épaisseur. D'une manière préférentielle, ce rapport pondéral charge / liant est compris entre 4/1 et 6/1.

Le sucre employé comme liant n'étant pas réticulé, puisque fondu à une température inférieure à sa température de dégradation, il est alors possible d'employer la composition selon l'invention pour la préparation d'un produit aggloméré de forme déterminée, par moulage, extrusion ou injection, pultrusion et rotomoulage ou filage.

La présente invention concerne donc également des produits agglomérés, articles de forme déterminée, constitués par la composition biodégradable selon l'invention. Les articles peuvent se présenter sous différentes formes, de pièces élémentaires, de profilés, de plaques, de structures en nids d'abeilles, etc. L'épaisseur minimale de ces produits agglomérés dépendra bien entendu de la taille moyenne des particules de charge, de préférence supérieure à 0,1 cm.

Les produits agglomérés obtenus peuvent être employés sous différentes formes, dans différentes utilisations, en particulier pour des pièces de feux d'artifice (coffre de bombes, barrettes, etc.), comme produit d'emballage (calage, caissette, etc.), notamment pour l'emballage de produits alimentaires, comme produit utile dans la fonderie, notamment pour la réalisation de pièces types ou de contre-moules, ainsi que pour la réalisation de plateaux de tir aux pigeons, ou encore dans l'armement (bourres de cartouches, munitions d'exercice ou engins de simulation, etc.).

Pour mouler la composition agglomérée selon l'invention, on la chauffe à une température inférieure à la température de dégradation du sucre, avantageusement comprise entre 100°C et 150°C, de préférence 110°C, de manière à faire fondre le liant pour obtenir une composition fluide, que l'on introduit dans un moule. Si l'on part de la composition pulvérulente, on fait d'abord fondre le sucre cristallisé sous agitation dans les conditions définies plus haut. Si l'on part d'une composition comprenant du sucre cristallisé fondu et refroidi, on peut envisager de maintenir la composition sous agitation mécanique à compter du moment où le sucre commence à fondre et la composition à se fluidifier, avant de l'introduire dans le moule.

On procède ensuite à une compression de la composition fondue dans le moule, de manière à obtenir un produit aggloméré compact. Cette compression est effectuée à la température à laquelle la composition a été versée dans le moule, avantageusement à une pression comprise entre 10 et 10 000 kg/cm, pendant une durée comprise entre 10 secondes et 8 minutes. Bien entendu, la durée et la pression employées pour la réalisation d'une pièce moulée, dépendront des caractéristiques techniques de cette pièce, et des contraintes qu'elle aura à subir.

Enfin, après cette opération de compression, on laisse refroidir la pièce moulée à une température appropriée pour son démoulage, avantageusement comprise entre 40°C et 60°C, de préférence 50°C, puis on l'extrait de son moule par des moyens usuels d'extraction des pièces moulées.

Pour l'ensemble des procédés, une phase granulation ou broyage peut être nécessaire.

Pour obtenir des pièces selon l'invention et au moyen de procédés autres que le moulage et énumérés précédemment, on peut être amené à ajouter des produits également biodégradables permettant d'améliorer la fluidité et/ou la viscosité du mélange. Les pressions dans les divers moules ou tous autres paramètres tels que la température, les vitesses de remplissage, etc., sont fonction de la complexité de chacune des pièces.

Bien entendu, en fonction de l'usage ultérieur des produits agglomérés, on peut rajouter divers additifs à la composition selon l'invention, comme des agents de conservation, des substances toxiques pour les rongeurs, des agents de résistance aux radiations UV, etc.

Par ailleurs, une fois le produit formé, on peut prévoir de l'enrober par une couche de peinture et/ou de vernis, tant pour des questions esthétiques que pour des raisons techniques, liées à la destination dudit produit aggloméré.

La présente invention concerne plus particulièrement des produits biodégradables d'emballage et/ou de support consistant essentiellement en au moins un produit aggloméré selon l'invention.

Les produits d'emballage et/ou de support peuvent être constitués de plusieurs produits agglomérés, pièces élémentaires qui sont assemblées par des moyens usuels appropriés. Ils peuvent comprendre d'autres éléments ; toutefois, l'essentiel de la fonction d'emballage et/ou de support sera assuré par les produits agglomérés biodégradables selon l'invention. Ces éléments additionnels peuvent être notamment des éléments de fixation, des charnières, des moyens de fermeture ou de liaison de différentes parties du produit aggloméré du produit d'emballage et/ou de support selon l'invention. Des inserts de diverses formes ou matières peuvent être incorporés directement à la phase élaboration de la pièce. On cherchera dans ce cas à employer des matériaux biodégradables ou rapidement décomposables pour conserver une bonne biodégradabilité des produits d'emballage ou de support selon l'invention.

D'une manière avantageuse, on cherchera à contrôler la biodégradabilité des produits d'emballage et/ou de support selon l'invention, de manière à conserver ses propriétés mécaniques au-delà de plusieurs mois.

Ce produit se caractérise par le fait qu'il a de bonnes propriétés mécaniques et une bonne stabilité durant toute son utilisation, compte tenu de la possibilité de gestion de la biodégradabilité.

Une méthode simple et préférentielle de contrôler cette biodégradabilité consiste à protéger au moins les faces externes des produits d'emballage et/ou de support selon l'invention par un moyen approprié, pour protéger le produit aggloméré des agressions de l'environnement extérieur.

La biodégradation interviendra alors une fois que le produit d'emballage ou de support est ouvert et/ou disloqué après usage. De préférence, la protection sera obtenue par l'application d'un vernis et/ou d'une peinture sur au moins les faces externes du produit aggloméré. Par faces externes, on entend les faces du produit au contact de l'environnement extérieur. Bien entendu, lorsque le ou les produits destinés à être emballés et/ou supportés peuvent interagir avec le produit aggloméré selon l'invention, on traitera d'une manière équivalente les faces internes dudit produit aggloméré.

Les produits d'emballage et/ou de support selon l'invention sont particulièrement adaptés pour une utilisation dans le domaine de la pyrotechnique ou des munitions, comme calage ou conditionnement primaire.

Les produits pyrotechniques ou les munitions sont constitués d'une manière générale, par les éléments suivants :
- une enveloppe de confinement,
- un initiateur pyrotechnique ou mécanique, et
- une charge utile génératrice de la fonction principale du produit, à savoir un effet sonore et/ou éclairant et/ou fumigène.

La charge utile est disposée à l'intérieur de l'enveloppe de confinement. L'initiateur pyrotechnique peut également être disposé à l'intérieur de l'enveloppe de confinement, dans sa totalité ou en partie.

Les produits pyrotechniques peuvent également comprendre un temporisateur pyrotechnique, une charge de dispersion et une charge d'éjection.

L'enveloppe de confinement a pour fonction essentielle :
- d'assurer le conditionnement des éléments pyrotechniques,
- de confiner les produits afin de permettre la réaction pyrotechnique recherchée,
- de ne pas générer des éclats dangereux dans les conditions normales d'utilisation,
- de respecter les contraintes de durée de vie du produit dans les conditions normales de stockage,
- de supporter les initiateurs pyrotechniques.

Cette enveloppe doit avoir des caractéristiques d'étanchéité permettant d'éviter :
- le passage de feu non désiré,
- la déperdition des produits pyrotechniques.

La matière qui la compose doit être compatible des composants qu'elle renferme.

Ces composants, autres que les pièces mécaniques à l'état solide, sont :
- soit pulvérulents de toute granulométrie,
- soit agglomérés par granulation ou compression.

Les composants à l'état pâteux ou liquide pourront être insérés dans cette enveloppe :
- soit directement s'il n'y a pas d'interaction entre l'enveloppe et les composants,
- soit par l'interposition d'une enveloppe intermédiaire ou d'un vernis.

Dans certains cas, les produits pyrotechniques et/ou les munitions doivent également pouvoir résister aux contraintes liées à des chutes de grande hauteur, résister aux vibrations et aux chocs, ou encore conserver les propriétés aérodynamiques liées à la forme du produit pour son déplacement dans l'air.

Les produits selon l'invention sont particulièrement adaptés pour la réalisation d'enveloppes de confinement dans des produits pyrotechniques ou de munitions, puisqu'ils répondent à l'ensemble des caractéristiques ci-dessus.

La présente invention concerne donc également des produits pyrotechniques ou munitions comprenant un produit d'emballage et/ou de support biodégradable défini ci-dessus. Pour les munitions on entendra de préférence des munitions d'exercice.

Les produits selon l'invention sont également adaptés pour la réalisation de produits de simulation pour essais ou exercices tels que vérification d'une trajectoire ou balistique.

Dans ce cadre, le produit doit avoir des caractéristiques mécaniques permettant de résister à des chocs, des vibrations, des chocs thermiques, etc.

Les chocs peuvent résulter :
- d'une chute de grande hauteur,
- d'une impulsion mécanique ou pyrotechnique.

Les vibrations peuvent être générées par :
- le transport (route / air / mer),
- l'emport sous avion.

Les chocs thermiques sont liés :
- aux conditions de stockage,
- aux contraintes d'emport sous avion.

Les bombes d'exercice destinées à simuler la trajectoire de bombes réelles sont un cas d'utilisation précis suivant les termes précédents. Leurs formes et leurs masses sont variables en fonction des bombes dont on cherche à simuler la trajectoire.

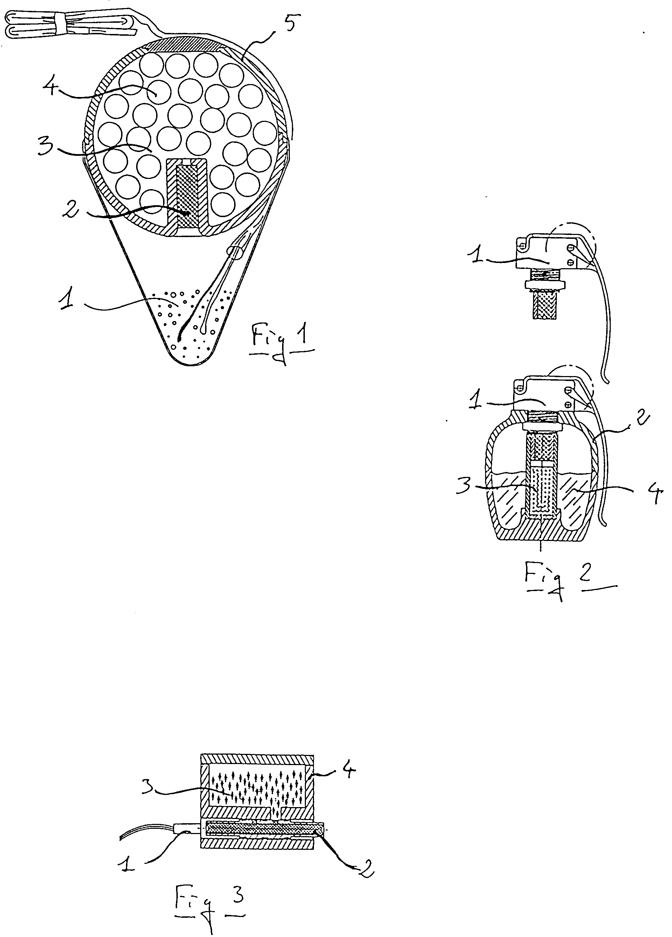

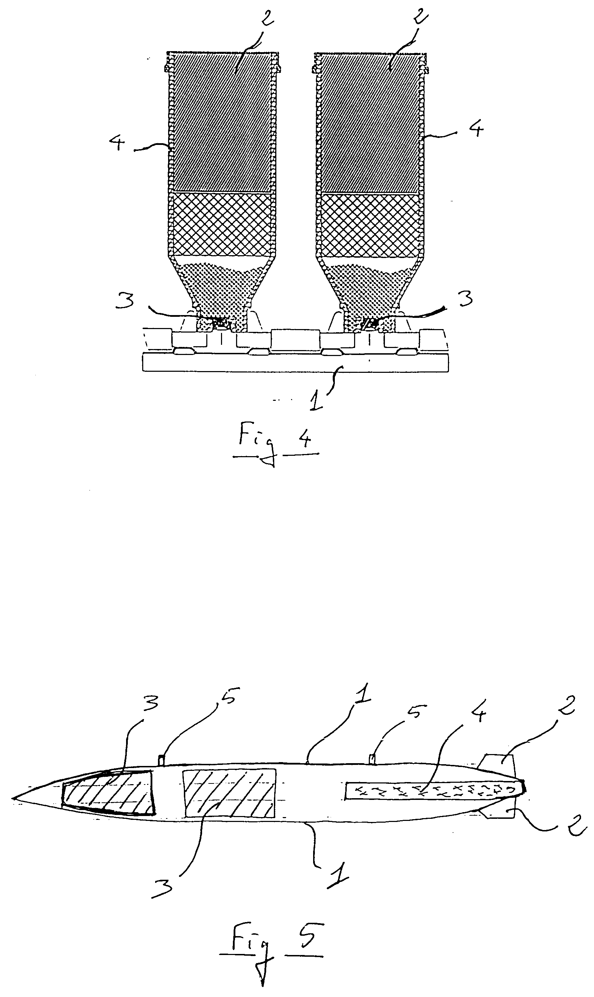

Les figures 1 à 5 en annexe représentent différents produits pyrotechniques selon l'invention, une bombe d'artifice (figure 1), une grenade d'exercice (figure 2), un bloc simulateur d'impact (figure 3), une barrette multicoup (figure 4), et une bombe d'exercice (figure 5).

La bombe représentée sur la figure 1 est constituée par une charge d'éjection 1, un retard pyrotechnique de trajectoire, une charge d'éclatement 3 et des étoiles d'artifice 4, ces deux derniers éléments étant confinés dans une enveloppe biodégradable 5.

Les étoiles 4 peuvent être remplacées par tout autre produit générateur d'effet visuel ou sonore.

Les principales caractéristiques de l'enveloppe biodégradable 5 sont :
- d'assurer le maintien ou le conditionnement de l'ensemble,
- d'interdire toute transmission de feu intempestive entre les divers éléments de la chaîne pyrotechnique,
- de confiner suffisamment la charge d'éclatement afin de permettre le bon allumage des étoiles et leur dispersion dans l'espace,
- de résister aux chocs générés par l'éjection de produit.

Les grenades d'exercice représentées sur la figure 2 sont de type avec bouchon allumeur intégré.

Elles sont constituées d'un pyromécanisme 1 qui coopère avec une enveloppe biodégradable 2 assurant l'étanchéité de cette dernière, et une charge de dispersion 3. Bien entendu, le pyromécanisme rapporté peut être remplacé par un pyromécanisme intégré. A l'intérieur de l'enveloppe biodégradable 2 est confinée une charge fumigène 4 inerte, constituée d'une poudre.

Les principales caractéristiques de l'enveloppe pyrotechnique biodégradable 2 sont :
- d'assurer le maintien de l'ensemble,
- d'assurer le conditionnement de la charge fumigène inerte 4.

Le simulateur de "coup de canon" ou d'impact représenté sur la figure 3 est constitué d'un initiateur 1 et d'un retard pyrotechnique 2 qui coopèrent avec l'enveloppe biodégradable 4 assurant son étanchéité, à l'intérieur de laquelle est confinée une charge utile 3.

Les principales caractéristiques de l'enveloppe biodégradable 4 sont :
- d'assurer le maintien de l'ensemble,
- d'interdire toute transmission de feu non désirée,
- de confiner suffisamment la charge sonore 3 afin d'avoir une bonne initiation et d'obtenir le niveau sonore requis.

La figure 4 représente une barrette multicoup comprenant un support biodégradable 1 sur lequel sont assemblés d'autres produits 2 identiques ou différents (interface identique) afin de produire plusieurs effets simultanés ou en séquence.

Il se présente sous la forme d'une barrette biodégradable 1 servant de support aux produits individuels 2 et aux éléments permettant d'assurer la séquence 3.

Les caractéristiques de ce produit sont :
- de servir de support,
- d'assurer l'étanchéité afin d'éviter l'initiation par communication de feux.

Bien entendu, les produits individuels 2 peuvent également être constitués par une enveloppe biodégradable 4 et des éléments pyrotechniques.

Enfin, la figure 5 représente une bombe d'exercice destinée à simuler les trajectoires de bombes réelles. Cette bombe d'exercice comprend un corps biodégradable 1 constitué essentiellement par un produit aggloméré selon l'invention dont la forme pourra varier en fonction du type de bombe dont on veut simuler la trajectoire. Elle comprend également un empenage 2, lui-même constitué de produit aggloméré selon l'invention ou par un autre matériau tel qu'un métal non traité, non protégé qui sera rapidement dégradé au contact de l'air et de l'humidité.

Cette bombe d'exercice comprend enfin une charge utile, elle-même constituée par exemple d'un lest 3 et d'un artifice de marquage, par exemple un produit pyrotechnique générateur de fumée 4, lui-même pouvant comprendre une enveloppe de confinement biodégradable selon l'invention. Lors de l'impact au sol, le corps de la bombe se disloque sans éclats, et évite les inconvénients des produits de l'état de la technique tels que des bombes d'exercice à corps métallique ou plastique, qui laissent des déchets métalliques. Enfin, la bombe d'exercice peut comprendre également des moyens de fixation 5 pour l'emport sous avion.

Les éléments d'emballage et/ou de support biodégradables des produits pyrotechniques selon l'invention sont avantageusement traités en surface pour améliorer leur résistance aux produits confinés pour leur face interne au contact desdits produits et/ou au milieu extérieur pour leur face externe. Il s'agit avantageusement d'appliquer un vernis ou une peinture appropriés à la surface du support. Dans ce cas, la biodégradation du produit aggloméré selon l'invention interviendra après la dislocation sans éclats du matériau support générée par le pyromécanisme ou les chocs.

On indiquera ci-après à titre d'illustration de la présente invention un exemple de mise en oeuvre du procédé de préparation d'un produit aggloméré particulier, à savoir un coffre de bombe de 100 mm pour artifices de divertissement.

Pour la mise en oeuvre du procédé selon l'invention, on utilise une composition binaire à base de rafle de maïs extra fine et de sucre cristallisé. L'outillage utilisé pour le moulage ainsi que les diverses étapes successives du procédé sont mentionnés ci-après.

L'outillage a été conçu pour réaliser trois pièces différentes constituant le produit fini. Il est constitué par :
- une embase porteuse de trois matrices,
- un ensemble vérin porteur de trois pistons,
- un circuit de chauffage électrique,
- un circuit de refroidissement par eau recyclée, et
- un extracteur.

Le processus de fabrication comprend les opérations successives suivantes :
- Phase 1 :: Préparation du mélange
Dosage
Produit de base 80 % (rafle de maïs extra fine)
Liant 20 % (sucre cristallisé)
- Phase 2 :: Préchauffage
Température
non critiques
Durée
- Phase 3 :: Moulage
Quantité du composant : 178 g
Température du moule : 145°C
Effort de compression : 30 tonnes réparties
Durée de maintien en température : 2 min.
- Phase 4 :: Refroidissement
Maintien jusqu'à obtention d'une température stabilisée de 50°C
- Phase 5 :: Extraction
- Phase 6 :: Finition

Les éléments ainsi obtenus sont assemblés par collage.

## Revendications

**1/** Composition pour produits agglomérés biodégradables, caractérisée en ce qu'elle comprend une charge constituée par des produits biodégradables d'origine végétale, et un liant biodégradable à base de sucre.

**2/** Composition selon la revendication 1, caractérisée en ce que le rapport pondéral charge / liant est compris entre 4/1 et 6/1.

**3/** Composition selon l'une des revendications 1 ou 2, caractérisée en ce que les produits biodégradables d'origine végétale sont choisis parmi les graines de céréales, la rafle de maïs, la sciure de bois, le liège, les aiguilles de pin, le coton brut, et leurs mélanges en toutes proportions.

**4/** Composition selon l'une des revendications 1 à 3, caractérisée en ce que les produits biodégradables d'origine végétale sont sous une forme particulaire, présentant une taille moyenne comprise entre 0,005 mm et 2 cm, de préférence comprise entre 0,05 et 2 mm.

**5/** Composition selon l'une des revendications 1 à 4, caractérisée en ce que les produits biodégradables d'origine végétale sont sous une forme particulaire, et la plus grande dimension des particules de charge est inférieure à 10 cm, de préférence inférieure à 5 cm.

**6/** Composition selon l'une des revendications 1 à 5, caractérisée en ce que le liant biodégradable est du sucre cristalisé et/ou du sucre cristallisé fondu.

**7/** Produits agglomérés, caractérisés en ce qu'ils sont constitués par la composition biodégradable selon l'une des revendications 1 à 6.

**8/** Produits agglomérés selon la revendication 7, caractérisés en ce qu'il sont obtenus par moulage, extrusion ou injection, imprégnation filaire, estampage ou pultrusion, et rotomoulage ou filage de la composition biodégradable.

**9/** Produits agglomérés selon l'une des revendications 7 ou 8, caractérisés en ce qu'ils se présentent sous la forme de pièces élémentaires, de profilés, de plaques ou de structures en nids d'abeille.

**10/** Produit d'emballage et/ou de support, caractérisé en ce qu'il consiste essentiellement en au moins un produit aggloméré selon l'une des revendications 7 à 9.

**11/** Produit d'emballage et/ou de support selon la revendication 10, caractérisé en ce qu'au moins ses faces externes sont protégées par un moyen approprié de manière à contrôler sa biodégradabilité jusqu'à l'ouverture et/ou la dislocation du produit après usage.

**12/** Produit d'emballage et/ou de support selon la revendication 11, caractérisé en ce qu'au moins ses faces externes sont enduites d'un vernis et/ou d'une peinture.

**13/** Produit d'emballage et/ou de support selon l'une des revendications 10 à 12, caractérisé en ce qu'il s'agit d'un produit pyrotechnique ou d'une munition.

**14/** Produit d'emballage et/ou de support selon la revendication 13, caractérisé en ce qu'il s'agit d'une enveloppe de confinement.

**15/** Produit d'emballage et/ou de support selon l'une des revendications 10 à 14, caractérisé en ce qu'il se disloque sans éclats.

**16/** Utilisation de produits agglomérés selon l'une des revendications 7 à 9, pour la fabrication de produits pyrotechniques ou de munitions, en particulier de bombes d'artifice, de grenades d'exercice, de simulateur d'impact, de barrettes multicoup et de bombes d'exercice.

**17/** Procédé de préparation d'un produit aggloméré selon la revendication 7, par moulage, caractérisé en ce que l'on effectue les étapes successives suivantes :
- on chauffe sous agitation mécanique la composition selon l'une des revendications 1 à 6, à une température comprise entre 80°C et 150°C, de préférence 110°C, pour assurer une répartition uniforme du liant et de la charge, puis
- on porte le mélange chauffé obtenu précédemment, à une température comprise entre 100°C et 150°C, de préférence 110°C, et on verse la composition fondue obtenue dans un moule pour obtenir la forme recherchée, puis
- on comprime la composition fondue dans le moule, à une pression comprise entre 10 et 10 000 kg/cm, pendant une durée comprise entre 10 s. et 8 min., puis
- on laisse refroidir la pièce moulée comprimée jusqu'à une température appropriée pour son démoulage, avantageusement comprise entre 40°C et 60°C, de préférence 50°C, puis
- on extrait le produit aggloméré obtenu.
